(19) Europäisches Patentamt
European Patent Office
Office européen des brevets

(11) Publication number : **0 516 483 A2**

(12) **EUROPEAN PATENT APPLICATION**

(21) Application number : **92304972.0**

(22) Date of filing : **01.06.92**

(51) Int. Cl.⁵ : **G06F 15/401**

(30) Priority : **31.05.91 JP 155312/91**

(43) Date of publication of application :
**02.12.92 Bulletin 92/49**

(84) Designated Contracting States :
**DE FR GB**

(71) Applicant : **Kao Corporation**
**14-10, Nihonbashi Kayabacho 1-chome**
**Chuo-Ku Tokyo 103 (JP)**

(72) Inventor : **Nakazawa, Shin-ichi**
**1-3, Asahigoaka,**
**Hanamigawa-ku, Chiba-shi, Chiba 262 (JP)**
Inventor : **Nabeshima, Hirohide**
**1-3, Asahigaoka Hanamigawa-ku,**
**Chiba-shi, Chiba 262 (JP)**

(74) Representative : **Darby, David Thomas et al**
**Abel & Imray Northumberland House 303-306**
**High Holborn**
**London WC1V 7LH (GB)**

(54) **Retrieval system for graphic information.**

(57)    A retrieval system for graphic information stores two dimensional graphic information previously as retrieval keys in database separately but in correspondence with the three dimensional graphic information on large number of shapes. As the two dimensional graphic information can be displayed on a screen of CRT display unit, a user can watch the screen while retrieving the necessary information by viewing the screen. Only when the target information is assigned, three dimensional graphic information is selected to display.

FIG. 1

EP 0 516 483 A2

This invention is applicable to computer-aided design (CAD) with support from an information processing system. This invention relates to a system for retrieving three dimensional graphic information stored in a database. This invention system was developed originally for designing a shape of a bottle for the sales of liquid commodities, but is widely applicable to information on three dimensional geometry other than bottles.

As the technology of the CAD system has advanced in recent years, we can use a system equipped with software which allows display of a part of input information on three dimensional graphic information, for example, only in the plan view, on the screen of a CRT display unit, and which, when the shapes displayed in plan are corrected on the screen, automatically corrects other graphic information other than the information for the plan view. In such a system, when a plan view of a shape is displayed on the screen of the CRT display unit and corrected by means of a mouse, the related corrections would be made by the computer on the side views of the right and left, bottom view and top view automatically. Some systems are constructed to urge users to input other information than those obtained from the instructions on the plan view guiding them to obtain fully corrected and completed information in the end, through interactive communication between a designer and the computer system.

In designing shapes using such CAD system, there has been proposed a method in which many sets of graphic information are stored in a database previously and on designing a new shape, graphic information relating to a certain shape is read out from the database and displayed on the CRT unit as the basic shape to be partially revised or modified. There has also been known a method in which plural sets of graphic information stored in the database are displayed on the screen of the CRT display unit simultaneously to set the positions, directions and dimensions of each shape arbitrary by operating a operation terminal, and to combine these sets of information into one. These methods are excellent in reducing the number of steps in the design process.

In designing using such CAD system, it is preferable to store information for a sufficiently large number of shapes in the database previously, and effectively select and retrieve a shape out of them which is most approximating to the target shape. It is preferable to reduce the portions which require revision or modification as much as possible in order to reduce the number of steps for designing a new shape. If the basic shape approximates the shape which a designer is going to make, he/she can understand the shape more comprehensively.

It is essential therefore to retrieve desired shape for the basic shape out of the graphic information on an extremely large number of shapes stored in the database. If the shape is simple, it can be named such as a "circle", a "square" or a "rectangle" to retrieve it by the name. When the number of stored graphic information is small enough to be coded by their characteristics, they can be retrieved by code and designers may display these graphic information one by one on the CRT display unit so as to select one for retrieval out of them.

However, when a cosmetic bottle is to be designed, the number of shapes of already designed bottles is enormous (for instance, several thousands), and they are not given names. If the graphic information on these large number of shapes is stored in the database, and a designer is going to retrieve one out of them by displaying them one by one on the display screen, it will take so much time. Moreover, as the stored information is about three dimensional shapes, it is not always possible to make accurate judgments from the display on the two dimensional screen, and the designer may not be able to obtain the target graphic information.

This invention was conceived in view of the above problems encountered in the prior art and aims to provide a retrieval system for three dimensional graphic information which can retrieve information on a large number of three dimensional shapes stored in the database.

First aspect of this invention system lies in that the database stores contrast information on two dimensional shapes representing respective three dimensional graphic information in correspondence with and in parallel with the three dimensional graphic information. Another aspect of this invention system lies in that the three dimensional graphic information and the two dimensional contrast information are stored in database in parallel with each other and with retrieval keys which correlate these two types of graphic information. Still another aspect of this invention system lies in that the graphical shapes displayed on the screen of the CRT display unit for retrieval are key images and when any one of the retrieved two dimensional contrast information is designated, the corresponding three dimensional graphic information will be retrieved by means of said retrieval keys.

The key images representative of features of a shape are preferably nine front views and six cross-sections of corresponding three dimensional graphic information. Said nine views preferably express the features of a shape most effectively. It is also preferable to divide a display screen of the CRT unit into plural segments, and simultaneously retrieve and display two dimensional contrast information of similar shapes on those segments.

The system is preferably constructed to select plural pieces of graphic information in an overlapping fashion, and to display the selected plural pieces of two dimensional information on the CRT display screen as similar shapes at the positions and in dimensions designated from the operation terminal at once so as to obtain combination of shapes.

When the display screen is divided into plural segments, the system is preferably arranged to display information on the plural segments arranged at one corner of the display screen so that only the selected graphic information is displayed in a greater size on the major part of the display screen. It is convenient to construct the system in such a manner that pieces of two dimensional contrast information are at one corner of the display screen so that additional information can be selected when graphic information on one shape is on display.

Key images which express features of each shape corresponding to respective pieces of three dimensional graphic information stored in the database, for instance, frontal views and sections thereof, are selected previously and stored as retrieval keys in the database. The key images are displayed on the screen of the CRT display unit for retrieval. A user learns the features of a shape from the displayed key images, displays them sequentially and when he recognizes the contrast information on the target two dimensional shapes he makes access to corresponding three dimensional graphic information stored in the database for retrieval using the retrieval keys.

As this system can simultaneously display plural pieces of two dimensional information in parallel to one another, users or designers can compare them for selection.

The arrangement of this system is quite effective and useful as it permits users to select and combine plural shapes into a composed shape. For example, in the design of a bottle, shapes of the bottle and of the lid are separately selected, changed in the size of their similar shapes, positioned at desired position and displayed graphically as a combined shape on the screen of the CRT display device.

Fig. 1 is a block diagram to show an embodiment of this invention system.

Fig. 2 is a chart to show the screen of the CRT display unit according to this invention embodiment.

Fig. 3 is an operation flow chart for registering graphic information in the database.

Fig. 4 is an operation flow chart for writing in the database.

Fig. 5 is an operation flow chart for executing a retrieval.

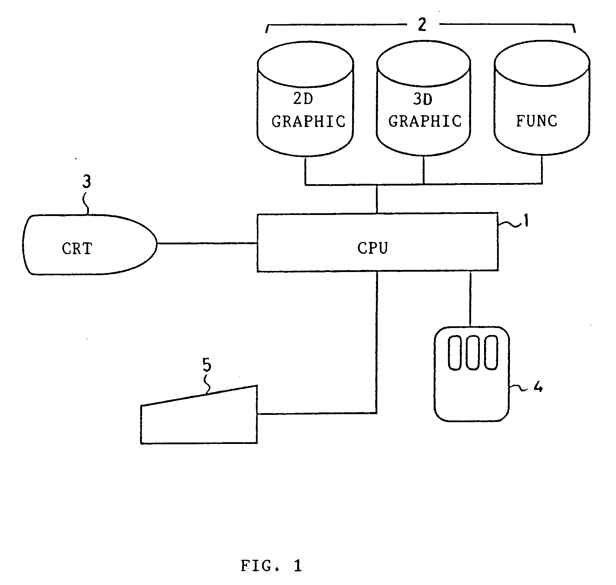

Fig. 1 shows in block diagram of an embodiment of this invention system. This embodiment has been developed as a design support system for packaging bottles such as those for cosmetics, shampoo, household detergents, and other consumer products.

This system comprises a central processing unit 1, a database 2 connected to the central processing unit 1, a CRT display unit 3 connected to the central processing unit 1, and an operation terminal comprising a keyboard 5 and a mouse 4 which is connected with the central processing unit 1. The database 2 stores three dimensional graphic information on a large number shapes. In the central processing unit 1, there are provided a display means which makes access to the database 2 and sequentially displays graphic information on said CRT display unit 3 and a selection means which selects graphical information displayed on said CRT display unit according to the instruction from said operation terminal.

The database 2 stores two dimensional contrast information which expresses the features of each item of three dimensional graphic information on said large number of shapes with retrieval keys for correlating them separately from the three dimensional information. Retrieval keys are in this embodiment a code comprising combinations of alphabets and numerals. The same characters are assigned to three dimensional graphic information and corresponding two dimensional contrast information except for some of the digits which comprise a code for differentiating the three dimensional information from the two dimensional information. The retrieval keys are the combinations of necessary information such as category (usage of the bottle), the year of manufacture thereof, whether it is the primitive shape or a modification, the sales district, and the year of design thereof.

Said display means is arranged to display the key images intended for retrieval purposes on the screen of the CRT display unit 3. Said selection means includes a means which automatically retrieves and selects the two dimensional contrast information corresponding to the key images designated on the screen of the CRT display unit 3 by the manipulation from the operation terminal, and automatically retrieves and selects the corresponding three dimensional graphic information by means of said retrieval keys.

For the two dimensional contrast information expressing said features, it is used a frontal view or one of the six views of the corresponding three dimensional graphic information. Information on a large number of shapes stored in the database 2 contains an extremely large number of designs of packaging containers for commodities which have already been designed, trial-made or sold and are naturally given as three dimensional graphic information. The two dimensional contrast information to be stored in the database 2 is extracted from the three dimensional graphic information previously and stored in a separate memory. The database 2 is provided with an additional memory for functional data which stores programs or other functional information for executing these steps.

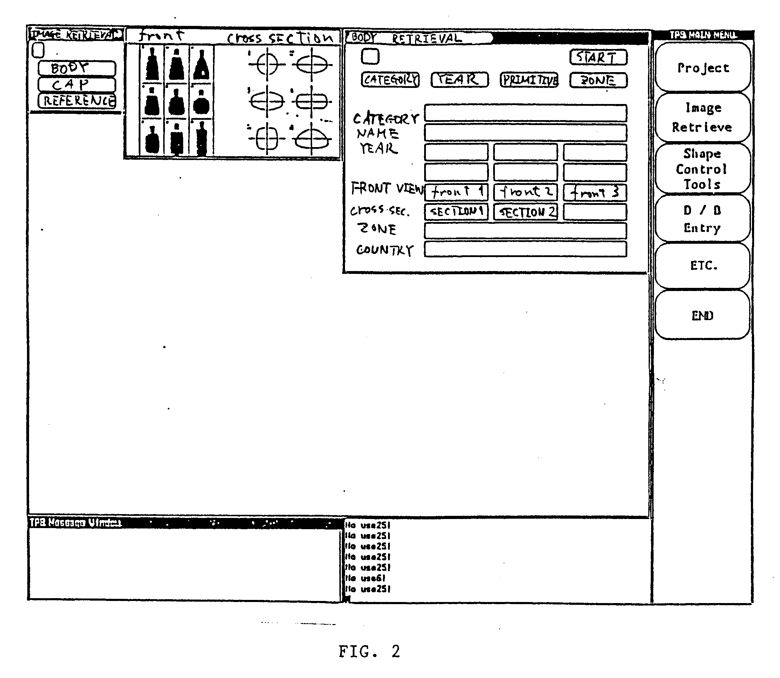

Fig. 2 shows an embodiment of the screen on the CRT display unit displaying data for retrieval which is controlled by the display means. In this embodiment, frontal views and sectional views are displayed simultaneously as the key images in the upper portion of the screen. The designer can quickly recognize and understand the outline of the graphical information by watching the key images on the screen. When the designer selects a key image and other retrieval keys by manipulating a mouse, the two dimensional contrast information can be displayed in any arbitrary size and in parallel to each other. They may be combined and displayed in similar figures in the size and at the position designated. By selecting an appropriate one from the two dimensional contrast information, the designer can obtain corresponding three dimensional graphic information.

In the screen shown in Fig. 2, the right column of the screen comprises a menu for operation, the upper left portion the menu for differentiating the body of a bottle from a cap which are the objects of the retrieval, and the lower portion the position to display messages necessary for operation. The users can specifically display the graphic information read out from the database 2 in the major portion at the center of the screen.

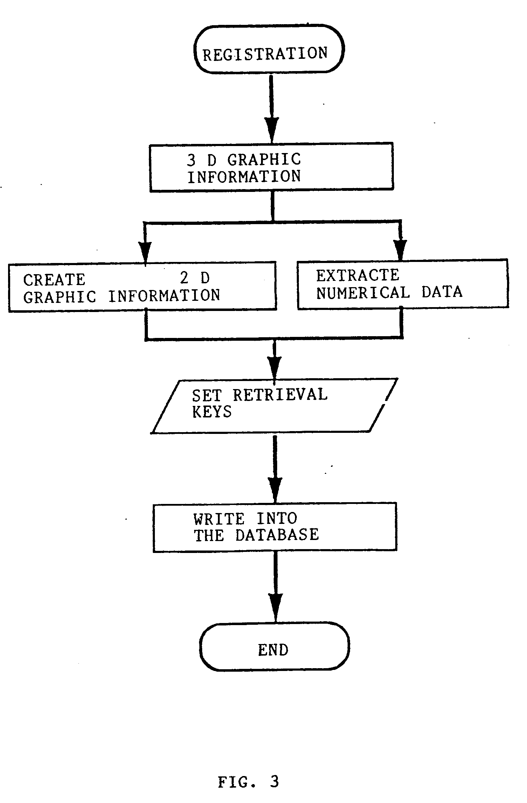

Fig. 3 shows an operation flow chart for storing graphic information in the database 2 of this embodiment. When three dimensional graphic information is inputted, two dimensional contrast information is created based on the input information, and numerical data are extracted from the three dimensional graphic information, retrieval keys including key images are set and written in the database.

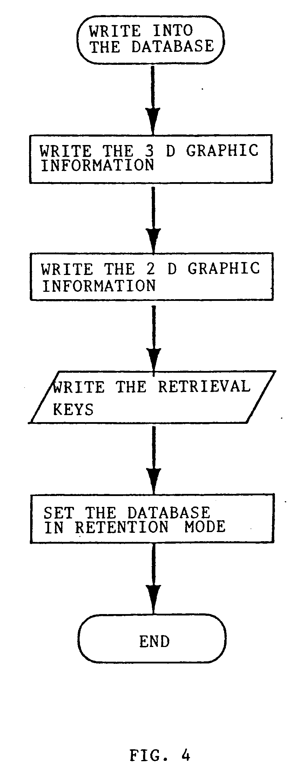

Fig. 4 shows an operation flow chart for writing in the database. The three dimensional information is first written in, and then that on the two dimensional contrast information is written in, followed by the retrieval keys. The database is set in retention mode so that the content of the database would not be destroyed and the database allows reading-out alone.

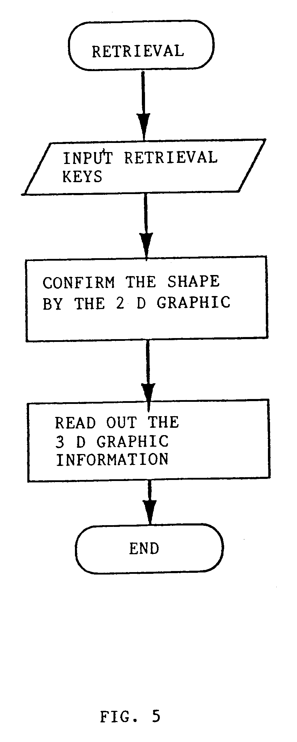

Fig. 5 shows a flow chart of the operation for said retrieval. When an operator inputs a retrieval key, two dimensional contrast information is read out to evaluate the shape. Then, information on the corresponding three dimensional graphic information will be retrieved.

This system is constructed to allow selection and simultaneous display of plural pieces of graphic information on a CRT display screen. The central processing unit of the system can simultaneously display plural pieces of two dimensional contrast information on the screen of said CRT display unit at a position and in similar figures of the size designated from said operation terminal. This construction permits display and evaluation of combinations of plural shapes.

Three dimensional graphic information displayed on the CRT display screen by this system can be corrected or revised on their shapes by means of a revision program separately provided to be used for topological design of a new shape. By selecting and retrieving one out of the already designed shapes as the basic shape and making design for a new shape based on the retrieved shapes, the number of design steps can remarkably be reduced.

As described in detail in the foregoing, this invention system can reduce the number of steps in the retrieval of graphic information remarkably and reasonably. As the designer can make use of the ample amount of the basic information when this invention system is utilized for designing, the designer can cover a wider scope in selection. By using the basic data, he/she can concentrate his/her efforts on the points which need revision and correction.

## Claims

1. A retrieval system for graphic information on three dimensional shapes comprising
   a central processing unit,
   a database connected to the central processing unit for storing three dimensional graphic information on a large number of shapes,
   a CRT display unit connected to the central processing unit and
   an operation terminal with a mouse and a keyboard connected to the central processing unit,
   said central processing unit including a display means which makes said CRT display unit display graphic information sequentially by accessing to the database and a selection means which selects graphic information displayed on said CRT in accordance with the selection instruction from said operation terminal,
   which is characterized in that
   two dimensional contrast information which is expressing features of the corresponding three dimensional graphic information as key image with retrieval key is stored in the database separately from the three dimensional graphic information,
   said display means is constructed to make such key images be displayed on said CRT display unit in accordance with the retrieval keys, and
   said selection means includes a means to select the three dimensional graphic information corresponding to the retrieval key designated on the screen of said CRT display unit by operating said operation terminal.

2. The retrieval system for graphic information as claimed in Claim 1 wherein said key image expressing features is the information on a part or the whole of the six views and sectional views of the three dimensional shape.

3. The retrieval system for graphic information as claimed in Claim 1 wherein said display means includes a means which divides the display screen of said CRT display into plural segments and displays plural key images which are similar in shapes to one another simultaneously and in parallel to each other in the plural segments.

4. The retrieval system for graphic information as claimed in Claim 1 wherein said selection means is constructed to select plural pieces of graphic information simultaneously, and said central processing unit includes a means which can simultaneously display the selected plural key images at positions and in size of the similar figures designated from said operation terminal on the screen of said CRT display unit.

5. An electrical system including storage means storing a plurality of first data sets each of which defines a three-dimensional shape, selection means for selecting any one of the first data sets from the storage means, and display means for displaying a two-dimensional representation of the three-dimensional shape defined by the selected first data set, characterised in that the selection means are capable of identifying each first data set by a corresponding combination of two-dimensional features on the shape which the first data set defines and the electrical system includes storage means storing a group of second data sets each of which defines a two-dimensional feature of each three-dimensional shape, one group of the data sets being entered into the electrical system and the other group of data sets being generated by the electrical system from the data sets entered, the electrical system being capable of displaying representations of the two-dimensional features of the three-dimensional shapes in a plurality of categories and of enabling the selection of a three-dimensional shape by the selection of a combination of two-dimensional representations comprising a two-dimensional representation from each category.

6. An electrical system as claimed in claim 5, including means for modifying a three-dimensional shape represented on the display means and capable of generating the first and second data sets defining the modified shape.

7. An electrical system as claimed in claim 5 or claim 6, which is capable of adjusting the first data sets of two shapes in order to generate representations which fit each other.

8. An electrical system as claimed in any one of claims 5 to 7, which is capable of displaying a first category of features consisting of a profile of each shape defined by the first data sets and a second category of features consisting of a cross-section of each of those shapes.

9. A method of operating an electrical system which includes storage means for storing a plurality of first data sets each defining a three-dimensional shape, selection means for selecting any one of the first data sets from the storage means, and display means for displaying a two-dimensional representation of a selected three-dimensional shape, comprising the steps of:
        generating a plurality second data sets from each first data set, each second data set defining a two-dimensional feature of the shape defined by the first data set,
        storing the second data sets in a manner which links the plurality of second data sets generated from a first data set to the first data set from which they were generated,
        displaying the two-dimensional features defined by each of the second data sets,
        selecting a first data set by selecting a combination of two-dimensional features comprising the features defined by the plurality of second data sets generated from that first data set, and
        displaying the three-dimensional shape defined by the selected first data set.

10. A method of operating an electrical system as claimed in claim 9, including the step of modifying the displayed three-dimensional shape defined by the selected first data set,
        generating and storing a modified first data set defining the modified shape, and
        generating and storing a plurality of second data sets defining two-dimensional features of the modified shape.

FIG. 1

IMAGE RETRIEVAL | front | Cross SECTION | BODY RETRIEVAL | TP9 MAIN MENU

BODY
CAP
REFERENCE

START

CATEGORY   YEAR   PRIMITIVE   ZONE

CATEGORY
NAME
YEAR

FRONT VIEW   front 1   front 2   front 3
CROSS SEC.   SECTION 1   SECTION 2
ZONE
COUNTRY

Project

Image
Retrieve

Shape
Control
Tools

D / B
Entry

ETC.

END

TP9 Message Window

No use251
No use251
No use251
No use251
No use251
No use61
No use251

FIG. 2

```
                    ┌─────────────────┐
                    │  REGISTRATION   │
                    └─────────────────┘
                             │
                             ▼
              ┌──────────────────────────┐
              │    3 D GRAPHIC           │
              │    INFORMATION           │
              └──────────────────────────┘
                             │
           ┌─────────────────┴─────────────────┐
           ▼                                   ▼
  ┌──────────────────────┐        ┌──────────────────────┐
  │ CREATE        2 D     │        │  EXTRACTE            │
  │ GRAPHIC INFORMATION   │        │  NUMERICAL DATA      │
  └──────────────────────┘        └──────────────────────┘
                             │
                             ▼
                  ╱───────────────────╱
                 ╱ SET RETRIEVAL     ╱
                ╱  KEYS             ╱
               ╱───────────────────╱
                             │
                             ▼
              ┌──────────────────────────┐
              │  WRITE INTO              │
              │  THE DATABASE            │
              └──────────────────────────┘
                             │
                             ▼
                    ┌─────────────────┐
                    │      END        │
                    └─────────────────┘
```

FIG. 3

```
            ╭─────────────────╮
           ╱  WRITE INTO       │
          │   THE DATABASE     │
           ╰─────────────────╯
                    │
                    ▼
        ┌──────────────────────────┐
        │  WRITE THE 3 D GRAPHIC   │
        │  INFORMATION             │
        └──────────────────────────┘
                    │
                    ▼
        ┌──────────────────────────┐
        │  WRITE THE 2 D GRAPHIC   │
        │  INFORMATION             │
        └──────────────────────────┘
                    │
                    ▼
        ╱──────────────────────────╱
       ╱ WRITE THE RETRIEVAL      ╱
      ╱  KEYS                    ╱
     ╱──────────────────────────╱
                    │
                    ▼
        ┌──────────────────────────┐
        │  SET THE DATABASE        │
        │  IN RETENTION  MODE      │
        └──────────────────────────┘
                    │
                    ▼
            ╭─────────────────╮
           │      END          │
            ╰─────────────────╯
```

FIG. 4

RETRIEVAL

INPUT RETRIEVAL
KEYS

CONFIRM THE SHAPE
BY THE 2 D GRAPHIC

READ OUT THE
3 D GRAPHIC
INFORMATION

END

FIG. 5